# EUROPEAN PATENT SPECIFICATION

(11) **EP 4 432 640 B1**
(45) Date of publication and mention of the grant of the patent: **06.05.2026**
(21) Application number: 23161413.2
(22) Date of filing: 13.03.2023
(51) Int. Cl.: H04M 3/42, H04M 3/51, H04M 3/436

(54) **TECHNIQUES TO PREVENT SPOOFING AND IMPROVEMENTS OF ECALLS PERMITTING A RELIABLE CALL-BACK**
TECHNIKEN ZUR VERHINDERUNG VON SPOOFING UND VERBESSERUNGEN VON ECALLS, DIE EINEN ZUVERLÄSSIGEN RÜCKRUF ERLAUBEN
TECHNIQUES POUR EMPÊCHER LA MYSTIFICATION ET DES AMÉLIORATIONS D'APPELS PERMETTANT UN RAPPEL FIABLE

(43) Date of publication of application: 18.09.2024
(73) Proprietor: Deutsche Telekom AG, 53113 Bonn (DE)
(72) Inventor: BÜCHTER, Martin, Troisdorf (DE)
(74) Representative: karo IP

(56) References cited:
- US-A1- 2018 152 817
- US-A1- 2022 182 490
- "Options for eCall MSD signalling", 3GPP DRAFT; OPTIONS FOR ECALL MSD SIGNALLING_21APRIL2006, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Paris; 20060626, 18 October 2006 (2006-10-18), XP050431227

## Description

The invention relates to a method, an analysis-module, an UE, and a computer product for reliably performing eCalls.

So-called emergency calls (also known as the 112 number or 911) are well known (and have been used for some time) to directly connect rescue services specifically to accident scenes or other emergencies. For some time now, regulated eCalls have been established in addition to these conventional emergency calls. Emergency calls and so mandated eCall are assigned certain privileges so that they can be given preferential and targeted treatment. The regulated eCall can also be referred to as a so-called 112-eCall service, which in principle has the same privileges as the conventional emergency calls. Such privileges include assigning a higher priority to these calls, providing the CLI (Calling Line Identity) of the person who made the call to the Public Safety Answering Point (PSAP), and maintain handling of such calls local, i.e., not leaving the regulatory scope of the callers.

Recently, however, third-party eCall services, also referred to as "third-party eCalls" or TSP eCalls, have become established for this purpose. These TSP eCalls are private services that are eligible offered in addition to and complementary to the 112 eCall services.

For example, for car manufacturers, TSP eCalls are the clearly preferred approach, as they offer the possibility to also enable commercial services, such as concierge service or infotainment, which are not feasible with 112 or 911 services. The vast majority of car manufacturers have therefore configured and implemented TSP eCalls at a large scale.

As well in areas of the world where eCall is not mandatory, a large number of car manufacturers offer TSP eCalls.

TSP eCalls are not connected directly to a Public Safety Answering Point (PSAP), but as a rule to the call center (CC) or the service center of the original equipment manufacturer (OEM) - this can therefore quite specifically be the call center of a car manufacturer. In regions where eCalls are not obligatory, only if no connection can be established with the call center, a real 112 eCall is initiated by the vehicle's telecommunication module, which connects people in distress directly with the PSAP. Since these TSP eCalls are not based on the emergency numbers such as 112 or 911, they do not come with the same privileges as the real emergency calls.

For such emergency calls, it is important that a voice connection can be established between the caller and the PSAP (Public Safety Answering Point). For this purpose, it is essential to know the "Calling Line Identity" (CLI) of the caller. Unlike 112 or 911, however, there is no guarantee that the CLI will be transmitted and/or made known in the case of TSP eCalls. Possible causes may be that the user equipment (UE) is configured accordingly, that the CLI is suppressed or lost in one of the participating networks.

In addition, there are still calls where the CLI transmitted and displayed to the recipient has been manipulated. This is referred to as call ID spoofing and means that the actual CLI of the caller is replaced by another spoofed CLI. In this case, it is not 100% obvious for the receiving CC who is calling and there is a possibility that the callback is specifically redirected to a fraudster. Another possibility is that the CC's callback is excluded by this if the displayed CLI is either not available, suppressed or manipulated.

US 1018/0152817 A1 discloses: A call is received by a device without, or with limited, information about the calling party. The call is then forwarded to another device where more calling party information is determined (such as by using the automated number information (ANI) protocol) or a database of information associated with phone numbers). These additional data are sent to the device of the called party and are used to populate a contact list on the device with these additional data. Then the call is forwarded to the called party again, and the device of the called party now reports the data stored in the contact list in response to receiving the call.

Accordingly, it is the task of the invention to provide techniques for reliably performing eCalls, in particular the so-called TSP eCalls and/or EU eCalls.

This object is solved by the features of the independent claims.

The features of the various aspects of the invention described below or the various examples of implementation may be combined with each other unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

According to a first aspect of the invention, a method for reliably performing eCalls, in particular for TSP eCalls or EU eCalls, is disclosed, the method comprising the following steps:
- Providing a CLI-analysis-module for eCalls,
   o which can be provided as a hardware module or as a software module on a computing unit;
- Obtaining or Receiving an eCall by the CLI-analysis-module, the eCall having a first part with voice or media connection and a second part with additional data associated with a UE, a vehicle and/or an eCall,
   o the eCall is sent by the user equipment (UE) or the vehicle, in particular the eCall is sent automatically by the UE/vehicle in the event of an emergency. However, the eCall can also be an eCall sent deliberately manually by the user of the UE. In principle, it is not absolutely necessary for the eCall to relate to an emergency, but the eCall can also relate to services, for example to a service offered by the OEM.
   o The eCall can comprise a CLI but it is also possible that the eCall does not comprise a CLI or the CLI is manipulated. In any case, the CLI of the eCall is looked up in a database as described below;
   o the UE can in principle be a smartphone, a smartwatch. In most cases, however, the UE is a vehicle. Hence, UE can be used as a general term but it is also possible to use the term UE and vehicle side by side. For cars as vehicles in particular, the eCall functionality has been mandatory for some time and is therefore also available;
   o the UE, the vehicle has a telecommunication module for sending the eCall. The telecommunication module is set up to exchange data with other components of the vehicle/UE so that the additional data can be generated that identifies the vehicle or UE and/or an accident situation. In particular, the telecommunication module can thus receive data from sensors and write these into corresponding data fields of the eCall;
   o the additional data associated with the UE can be a IMEI or a subscription of a network operator from which the UE is bought, the additional data associated with the vehicle can be a VIN, the additional data associated with the eCall can be IDs or other data typically used for eCalls that are suited to refer to a unique CLI. Further examples will be shown below;
- Analyzing of the additional data by the CLI-analysis-module, the CLI-analysis-module using the information from the additional data to determine the CLI, to confirm the CLI and/or establish as incorrect the CLI assigned to the eCall by means of a database query with regard to the additional data.
   o the CLI-analysis-module has an algorithm which is set up to extract at least a subset of the additional data from the additional data record of the eCall. The algorithm knows which of these data are suitable for providing usable information with regard to a CLI assigned to the eCall. The algorithm can also be set up to query corresponding data from a database after this extraction and to analyze this data together with the additional data in order to determine the CLI.
   ∘ The additional data has a unique identifier, and an entry in the database links this unique identifier to a CLI - for example, in the form of a table entry. In this case, it can be said that the CLI assigned to the eCall has been determined. If the CLI has already been transmitted with the eCall and it is determined by comparison with the database query that the two CLIs are identical, we will hereafter speak of confirmation in the context of the present invention. The confidence level of the confirmation is lower than that of the determination. If a CLI cannot be determined by the database query or if the CLI transmitted with the eCall differs from the CLI determined by means of the database query, it is referred to in the context of the present invention that the CLI has been determined to be false, i.e. spoofing has taken place, for example;
   o From the Minimum Set of Data (MSD) that is transmitted to the CC of the OEM or the PSAP with every eCall. The MSD contains, among other things, information about the time of the emergency call, the vehicle type (VIN) as well as the location and direction, the type of drive and the way in which the emergency call was triggered. Since the MSD is "the lowest common denominator", e.g. VIN can also be used in combination with other parts of the MSD for this purpose. TSP eCalls include at least the MSD and other OEM proprietary data. Depending on the OEM, proprietary data specifically for the purpose of verification, which is stored in the device in a protected manner and is only known to the OEM, could also be used as an option.

The method thus enables reliable execution of eCalls, since it is possible to analyze the eCall with regard to its CLI. The CLI is important if further actions are to be performed with the eCall, such as establishing a voice or other media connection. Depending on whether the CLI is determined, confirmed or found to be false, suitable further steps or decisions can be taken in a targeted manner. The present technical solution thus minimizes spoofing risks and significantly improves the provision of the correct CLI. If spoofing is detected, the spoofing case could be logged and/or reported to the responsible regulatory authority or the network operator so that the source of the spoofing can be identified and eradicated if necessary.

In a preferred embodiment, the CLI-analysis-module is associated with an OEM, a PSAP, or a network operator. In particular, the CLI-analysis-module may be provided in a communication environment of the OEM, the PSAP, the network operator, or another trusted party. Typically, an eCall is routed to the OEM or a call center associated with the OEM. If the CLI-analysis-module is assigned to an appropriate location at the OEM, the OEM can analyze the eCall with respect to the CLI as described above. In such a case, therefore, the capacities of the PSAP are relieved, whose operational capability must be guaranteed under all circumstances for emergencies. In addition, the OEM usually has knowledge of the necessary information, for example by holding the database for the database query in order to analyze the eCall. However, it may make sense to provide another CLI-analysis-module at the PSAP as well. In this case, it makes sense to provide another CLI-analysis-module at the PSAP so that it can analyze the eCall accordingly. It may be useful to set a flag for the eCall if it has already been analyzed by the OEM's CLI-analysis-module and is forwarded, so that the PSAP's further analysis module can dispense with an analysis for reasons of efficiency. Another possibility is to provide the analysis module in the network of the network operator that transmits the eCall. This has the advantage that a centralized analysis instance can be provided for various OEMs or PSAPs, and that the eCall is analyzed as "early" as possible (and not only when it arrives via the OEM) and appropriate measures can be taken.

In one embodiment, a database for data retrieval is provided at the OEM and/or in a central register. In particular, the database in a central register is designed as a "trusted" database. If the analysis-module is provided in the communication network of the OEM, it may be advantageous to provide the database there as well, since the OEM usually has the corresponding information for analyzing the additional data. However, the database in the central register has the advantage that analysis modules, regardless of where they are implemented, can all access a single central register, so there is no need to maintain multiple databases, but rather a single database is sufficient. If this database is additionally designed as a "trusted" database, this enables it to guarantee a higher level of security with regard to correct data than a database of an OEM.

In one embodiment, the CLI-analysis-module communicates with the database in an encrypted and/or tamper-proof manner. This has the effect of ensuring that the data cannot be tampered with during transmission. Indeed, tampering at this point would equally result in the CLI being determined to be false. For example, hash values can be used to transfer data in a tamper-proof manner.

In one embodiment, the additional data has an IMEI, a VIN, an IMSI, and/or a MSISDN. The IMEI is the so-called international mobile station equipment identity - this is a 15-digit serial number of terminal devices. The VIN is the vehicle identification number. The IMSI is the international mobile subscriber identity. The MSISDN is the Mobile Station Integrated Services Digital Network Number and is the globally unique telephone number.

The manufacturer and/or the OEM have knowledge of at least a subset of this information (IMEI, VIN, IMSI, MSISDN) along with the corresponding associated CLI when he puts the UE, in particular in the form of the car, into operation. The manufacturer and/or the OEM is thus able at this time to create a corresponding data record and to enter it in the database or provide it to the database. It follows that the database shows at least one or a combination of the corresponding information with the associated CLI. Thus, for example, if the VIN is extracted from the additional data, it is possible to look up in the database which CLI is associated with that unique VIN. The additional data can also have GNSS data. The GNSS data serves more as a plausibility criterion, a manipulation was carried out. As a rule, GNSS data is regularly transmitted from the UE to the OEM. If this data shows a sudden change in the localization of the UE (for example, that the vehicle has traveled 50 km within 1 minute), this is also an indication that the eCall may have been tampered with.

In one embodiment, the additional data is an MSD data set or the additional data has at least the MSD data set. In particular, the MSD data set may have accident-related data. This has the advantage that the MSD data set is a standardized, regulated data set. Since it is always sent with the eCall, this ensures that CLI-analysis-modules can be set up to analyze the CLI based on this data set, so that no problems arise, as might be the case if car manufacturers use very different versions of additional data. This prevents a "jumble of formats" that the manufacturer's own systems can cause.

Minimum Set of Data (MSD) is the name of the data telegram that is transmitted in the eCall emergency call system in the event of an accident or emergency from the vehicle's own eCall device of the In-Vehicle System (IVS) to the emergency call center, the Public Safety Answering Point ( PSAP). The data telegram is 140 bytes long and may have information about the time of the emergency call, the vehicle type and location, the type of drive, the direction of travel, the method of initiating the emergency call, information about the severity of the accident, and some other information.

In one embodiment, the additional data can be at least partially generated dynamically by the UE. This has the effect that current accident-relevant information can be included in the additional data.

In one embodiment, a validation of the CLI is performed in case the CLI is determined or confirmed. This has the effect that a successful validation additionally increases the probability that the CLI is correct. The validation can be performed in particular by making the CLI and/or the additional data available to a home network operator, in particular in encrypted form, and the home network operator comparing these with existing HLR entries.

In an alternative or additional variant of the validation, a renewed encrypted transmission of the eCall, in particular of the additional data, is requested, in particular by the CLI-analysis-module, from the UE. The request can be generated in particular by the CLI-analysis-module. If this newly transmitted eCall matches the previous one (possibly apart from the GNSS data), it is more plausible that the initial eCall was correct, since otherwise there must have been manipulation of the originally sent eCall and the encrypted eCall sent on request.

The determination of the CLI can be assigned a lowest trust level, the confirmation of the CLI a medium trust level, and the validation of the CLI the highest trust level. The trust levels can influence how the eCall is further handled after the corresponding trust level has been determined.

Accordingly, the eCall can be forwarded to the OEM and/or the PSAP with the CLI during identification, confirmation or validation. By sending the CLI, for example, a voice setup is made possible. Since an emergency call, if it is really an emergency, must be delivered in any case, it can be provided that the emergency call is forwarded differently PSAP even at the lowest trust level, i.e. during the determination. If the eCall concerns services other than an emergency call, it can be specified by the OEM, for example, that the eCall is only processed further within the OEM's system from the middle or highest trust level.

In one embodiment, the eCall is rejected if the CLI is determined to be false and/or a new eCall is requested. The rejection has the advantage that an eCall that has most likely been tampered with, in particular spoofed, is not handled further for security reasons, so that the criminal originators cannot achieve their purpose. In particular, this prevents the fraudsters from accessing service and of the OEM or sending false emergency calls to the PSAP. Under certain circumstances, however, the CLI may be determined to be false due to faulty data transmission. In this case, resending the eCall enables an error-free transmission to take place in the second attempt and the CLI to be confirmed as correct.

According to a second aspect of the invention, a UE is disclosed, wherein the UE is designed to generate additional data of an eCall and to transmit the additional data with the eCall, the additional data being suitable for carrying out the method described above.

According to a third aspect of the invention, an analysis module for eCalls, in particular the CLI-analysis-module described above, is disclosed, wherein the analysis module comprises:
- Means for receiving an eCall, the eCall having a first part with voice call data and a second part with additional data associated with the UE,
   o in principle, the UE can be a smartphone or a smartwatch. In most cases, however, the UE is a vehicle. For cars in particular, the eCall functionality has been mandatory for some time and is therefore also available.
   ∘ the means for receiving the eCall can be appropriately set up communication interfaces, whereby the eCall can then be appropriately forwarded to a computing unit of the analysis module on which an algorithm for analyzing the eCall, in particular the associated additional data, is implemented;
- Means for analyzing the additional data, wherein the CLI-analysis-module uses the information from the additional data to determine, confirm and/or determine as incorrect the CLI assigned to the eCall by means of a database query with regard to the additional data.
   ∘ the means for analyzing the additional data may be the aforementioned algorithm arranged to compare the additional data with entries of a database and, upon finding a match of the additional data in the entries of the database, to extract the corresponding CLI entry of the database and to determine it as the CLI associated with the eCall.

The advantages of the analysis module correspond to those of the process.

According to a fourth aspect of the invention, a computer program is disclosed that comprises instructions which, when the program is executed by a computer, cause the computer to carry out the steps of the method.

In the following, preferred implementation examples of the present invention are explained with reference to the accompanying figure:
- Fig. 1:: shows how European eCalls and TSP eCalls are currently processed.
- Fig. 2:: Shows an inventive method for reliably performing eCalls;
- Fig. 3:: Shows an inventive communication system set up to perform the method according to Fig. 2;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

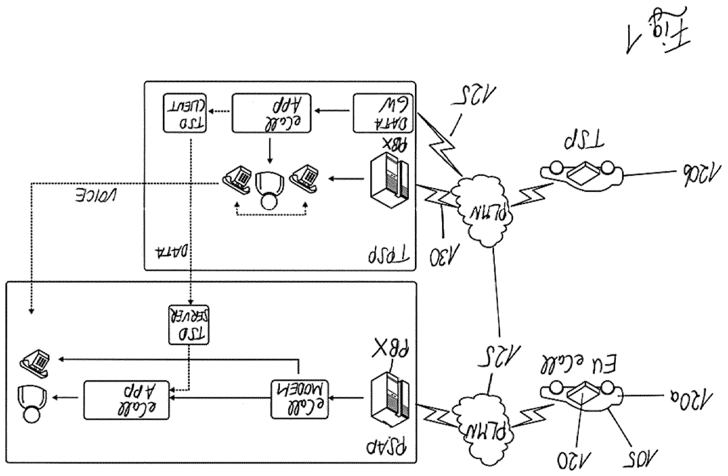

Fig. 1 shows how European eCalls and TSP eCalls are currently processed. Fig. 1 shows vehicles 105, each vehicle 105 being provided with telecommunication modules 110 for generating and sending an eCall, especially during emergencies.

Via mobile radio, the eCalls are sent to a PLMN 115 (Public Land Mobile Network). While in the case of EU eCall 120a in 2G and 3G radio networks the additional data is transmitted as MSD via modem in the voice channel or in 4G, 5G and future 6G radio networks via SIP Invite Message in IMS-based systems, in the case of TSP eCalls 120b the data record is transmitted via a data link 125 in this case a separate channel is also provided for the voice signal 130. That is, in a 2G or 3G system, the data set is transmitted by a different path than the voice connection. In SIP-based systems, the additional data is transmitted via SIP Invite or SIP Info Message. The SIP here is the "Session Initiation Protocol" known to the specialist.

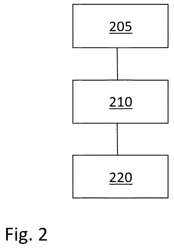

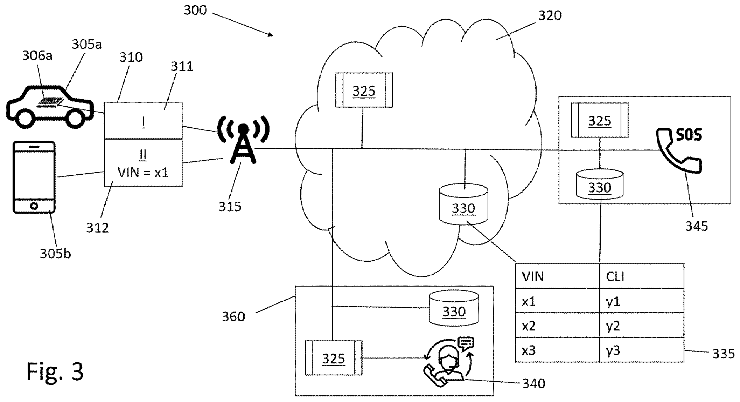

The method according to the invention as shown in Fig. 2 and Fig. 3 can now be based on the technical layout as shown in Fig. 1, whereby the additional functional elements described below must be present for the invention to be carried out.

Fig. 2 shows an inventive method for reliably performing eCalls.
Step 205: Provide a CLI-analysis-module for eCalls;
Step 210: Receiving an eCall by the CLI-analysis-module, the eCall having a first part with voice call data and a second part with additional data associated with the UE,
Step 215: Analysis of the additional data by the CLI-analysis-module, wherein the CLI-analysis-module determines, confirms and/or determines as incorrect the CLI assigned to the eCall by means of the information from the additional data by means of a database query with regard to the additional data.

In specific embodiments, this may still be implemented in the following scenarios, for example:
Scenario A: eCall with an anonymous media connection (usually voice) and additional data with the transmission of a CLI.

If an anonymous TSP eCall is made to a call center, the transmitted additional data can be used to examine a correlation with the CLI determined from the database and the CLI transmitted in the determined message. The CLI is checked against an entry in the database, where the database is provided either at the OEM or in a central registry.
2. In case no CLI known to the call center can be identified and/or there is no match with the CLI transmitted in the additional data, it is most likely spoofing;
3. In the event that a corresponding CLI is available from the transmitted additional data (e.g., based on the VIN), further validation of the CLI against a subscription of the UE with the home network operator or a service provider can be performed. For this purpose, the call center may transmit the determined CLI to the home network operator or the service provider. The home network operator or the service provider validates the determined CLI against an entry in the HLR register, for example using the IMSI. Since the call center has no knowledge of the HLR, the home network operator or service provider acts as a kind of trusted platform in this case.
4. If the validation is negative, it is most likely spoofing.
5. If the validation is positive, the CLI can be regarded with a high probability as correctly reconstructed and forwarded or handled further. If required by the PSAP, the eCall can be transferred from the call center to the PSAP with the CLI in the event of a genuine emergency call, so that the possibility of a call-back by the call center and/or the PSAP is also made possible.
6. In case of a successful validation, an additional validation can be performed by a new secured query of the data set with the determined CLI from the UE. This procedure is explained below.

Thus, the invention makes it possible to meet the operational requirements that are standardized for third-party emergency call support.

Scenario B: eCall media connection (usually voice) and additional data on different channels (for example, with media connection = voice channel; data set = SMS, USSD or other signaling).

B.1) Anonymous media TSP eCall supplemented with additional data with a CLI:
1. A correlation with a CLI from an entry in the database is performed by means of the transmitted additional data. The CLI is checked against an entry in the database, where the database is provided either at the OEM or in the central register.
2. In case no CLI known to the call center can be identified and/or there is no match with the CLI transmitted in the additional data, it is most likely spoofing;
3. In the event that a corresponding CLI is available from the transmitted additional data (e.g., based on the VIN), further validation of the CLI against a subscription of the UE with the home network operator or a service provider can take place. For this purpose, the call center may transmit the determined CLI to the home network operator or the service provider. The home network operator or the service provider validates the determined CLI against an entry in the HLR register, for example using the IMSI. Since the call center has no knowledge of the HLR, the home network operator or service provider acts as a kind of trusted platform in this case.
4. If the validation is negative, it is most likely spoofing.
5. If the validation is positive, the CLI can be regarded with a high probability as correctly reconstructed and forwarded or handled further. If required by the PSAP, the eCall can be transferred from the call center to the PSAP with the CLI in the event of a genuine emergency call, so that the possibility of a call-back by the call center and/or the PSAP is also enabled.
6. In case of a successful validation, an additional validation can be performed by a new secured query of the data set with the determined CLI from the UE. This procedure is explained below.

B.2) Anonymous media TSP eCall with anonymous additional data without specifying a CLI:
1. A CLI is determined from an entry in the database by means of the transmitted additional data. The CLI is determined against an entry in the database, whereby the database is provided either at the OEM or in the central register.
2. In case no CLI known to the call center can be identified, it is most likely spoofing;
3. In the event that a corresponding CLI is available from the transmitted additional data (e.g., based on the VIN), further validation of the CLI against a subscription of the UE with the home network operator or a service provider can be performed. For this purpose, the call center may transmit the determined CLI to the home network operator or the service provider. The home network operator or the service provider validates the determined CLI against an entry in the HLR register, for example using the IMSI. Since the call center has no knowledge of the HLR, the home network operator or service provider acts as a kind of trusted platform in this case.
4. If the validation is negative, it is most likely spoofing.
5. If the validation is positive, the CLI can be regarded with a high probability as correctly reconstructed and forwarded or handled further. If required by the PSAP, the eCall can be transferred from the call center to the PSAP with specification of the CLI in the event of a genuine emergency call, so that the possibility of a call-back by the call center and/or the PSAP is also enabled.
6. In case of a successful validation, an additional validation can be performed by a new secured query of the data set with the determined CLI from the UE. This procedure is explained below.

B.3) CLI of the media TSP eCall and CLI of the additional data differ:
1. In the first step it is checked whether both CLIs match, if this is not the case, it can be spoofing. In a next step, both CLIs are compared accordingly with entries of the database. If at least one of the CLIs matches the database entries, this CLI is most likely a correct CLI, whereas the other part of the data may have been manipulated. In this case, it is advantageous to request a resend of the eCall from the UE.
2. In the case that neither of the two CLIs can be determined, it is most likely spoofing;
3. In the event that both CLIs match and could be determined by means of the database from the transmitted additional data (e.g., based on the VIN), further validation of the CLI against a subscription of the UE with the home network operator or a service provider can take place. For this purpose, the call center may transmit the determined CLI to the home network operator or service provider. The home network operator or the service provider validates the determined CLI against an entry in the HLR register, for example using the IMSI. Since the call center has no knowledge of the HLR, the home network operator or service provider acts as a kind of trusted platform in this case.
4. If the validation is negative, it is most likely spoofing.
5. If the validation is positive, the CLI can be regarded with a high probability as correctly reconstructed and forwarded or handled further. If required by the PSAP, the eCall can be transferred from the call center to the PSAP with the CLI in the event of a genuine emergency call, so that the possibility of a call-back by the call center and/or the PSAP is also enabled.
6. In case of a successful validation, an additional validation can be performed by a new secured query of the data set with the determined CLI from the UE. This procedure is explained below.

Explanation of the procedure for further validation:
The procedure of further validation can also be applied to connections where the CLI is present, depending on the requirements, for example to avoid spoofing.

The further validation procedure uses the determined CLI, whereby the call center contacts the UE using the CLI and requests the UE to transmit the additional data and/or the entire eCall again in encrypted form. If the retransmitted data set of the additional data and/or the eCall is identical to the original one, the CLI has been further validated.

The encryption can include at least the record of the additional data and/or fields relevant to data protection. This ensures that misuse or manipulation of the data record is ruled out.

An asymmetric encryption method, for example, is suitable for this purpose. The call center is responsible for key management. The call center has the option of entering protected values in the UE or adding or changing them via over-the-air (OTA) update.

For this purpose, the operator of the call center can specify an asymmetric key pair per UE. The call center also has a key here, whereby only the public key is known, but not the call center's private key. The call center configures the UE's private key and the call center's public key on the UE.

The keys can be stored on an area protected in the UE, editable only by the call center. In case of a corresponding query, the record of the additional data is encrypted with the public key of the call center. The call center can now decrypt the additional data with its private key. To prevent the data record from being manipulated unnoticed, a so-called hash value of the additional data can also be generated and signed via the asymmetric encryption system used. To ensure authentication of the participants, the message can optionally be signed.

Fig. 3 shows an inventive communication system 300 set up to perform the method of Fig. 2.

Exemplary UEs 305 shown are a car 305a and a smartphone 305b, each of which can send an eCall 310, especially in emergency situations, over the cellular network. The mobile network and corresponding components may be based on 3G, 4G, 5G and/or 6G technology. In principle, the invention remains unaffected by this 5G and/or 6G networks, however, make it possible to define a dedicated network slice for processing the eCall. The car 305a has a corresponding telecommunication module 306a for this purpose, since a telecommunication module is already an integral part of the smartphone 305b anyway, such a module is therefore not shown again separately in the smartphone 305b.

The eCall 310 has a first part 311 containing voice call data and a second part 312 containing additional data. As a non-exhaustive example of the possible entries of the additional data, the eCall 310 according to Fig. 3 shows the entry of a VIN, specifically the VIN with the number "x1".

The eCall 310 is received by a base station 315 and transferred to the network 320, in particular the core network, of a network operator.

As described above, an analysis of the additional data is now performed to determine, confirm, or detect spoofing of the CLI of the eCall 310.

For this purpose, a corresponding eCall analysis module 325, in particular a CLI-analysis-module 325, may be provided at different localizations and assigned to different subscribers of the communication system 300, wherein the eCall 310 is transmitted to at least one of these analysis modules 325.

It is possible to provide a first CLI-analysis-module 325 in the network 320 of the network operator, in the system of the PSAP 350, and/or in the system of the call center 360.

After receiving the eCall 310, the CLI-analysis-module 325 queries a database 330 using a database query with respect to the additional data. The database 330 may also be present multiple times in the communication system 300, and in particular may be associated with different subscribers. Thus, it is possible for the database 330 to be provided in the network 320 of the network operator, in the system of the PSAP 350, and/or in the system of the call center 360. Typically, it may be most appropriate for the CLI-analysis-module 325 to query the database associated with the same subscriber of the combination system 300. However, it is also possible to provide, for example, only a single database 330, such as centrally located in the network 320 of the network operator, whereby all subscribers may query this one central database 330.

An exemplary entry 335 of the databases 330 in the form of a table shows various VIN numbers and their associated CLI. Thus, in the present case, the CLI-analysis-module 325 would query the database 330 to determine whether a CLI entry exists for the VIN=x1, and in response CLI=y1. In this case, therefore, the CLI=y1 would be reconstructed and can be forwarded to the appropriate subscribers for further processing along with the rest of the eCall 310. For example, the forwarding may be to a service offering 340 of the OEM and/or to an emergency telephone 345 of the PSAP 350.

The communication system 300 is also capable of performing any of the variations of the method described above.

## Claims

1. A method for reliably performing eCalls, the method comprising the steps of:
• Providing a CLI-analysis-module (325) for eCalls (310);
• Obtaining an eCall (310) by the CLI-analysis-module (325), the eCall (310) having a first part (311) with voice or media connection and a second part (312) with additional data associated with a User Equipment UE, wherein the additional data has a unique identifier that is linked to a Calling Line Identification CLI;
• Analyzing of the additional data by the CLI-analysis-module (325), the CLI-analysis-module (325) using the information from the additional data to determine the CLI, confirm the CLI and/or establish as incorrect the CLI assigned to the eCall (310) by means of a database query with regard to the additional data;
• Forwarding the eCall to the Original Equipment Manufacturer OEM and/or the PSAP with the CLI upon determination and/or confirmation.

2. The method according to any of the preceding claims, wherein the CLI-analysis-module (325) is associated with an OEM, a PSAP, a network operator or another trusted party.

3. The method according to any of the preceding claims, wherein a database (330) is provided for the database query at the OEM and/or in a central register.

4. The method of claim 3, wherein the CLI-analysis-module (325) communicates with the database (330) in an encrypted manner.

5. The method according to any of the preceding claims, wherein the additional data comprises an IMEI, a VIN, an IMSI, a MSISDN and/or GNSS data.

6. The method according to any one of the preceding claims, wherein the additional data comprises at least a MSD data set.

7. The method according to any one of the preceding claims, wherein the additional data is at least partially dynamically generated by the UE (305a, 305b).

8. The method according to any one of the preceding claims, wherein in the case of determination or confirmation of the CLI a validation of the CLI is performed.

9. The method of claim 8, wherein validation of the CLI is performed by making the additional data and/or the CLI available to a home network operator and the home network operator verifies the CLI with existing HLR and/or HSS entries.

10. The method according to any one of claims 8 or 9, wherein the validation requests a new encrypted transmission of the eCall, in particular of the additional data, from the UE.

11. The method according to any of the preceding claims, wherein the eCall is rejected if the CLI is determined to be incorrect

12. An Analysis module for eCalls, in particular a CLI-analysis-module, wherein the analysis module comprises:
• Means for receiving an eCall, the eCall having a first part with voice or media call and a second part with additional data associated with the a User Equipment UE, wherein the additional data has a unique identifier that is linked to a Calling Line Identification CLI;
• Means for analyzing the additional data, wherein the CLI-analysis-module uses the information from the additional data to determine, confirm and/or establish as incorrect the CLI assigned to the eCall by means of a database query with regard to the additional data;
• Means for forwarding the eCall to the Original Equipment Manufacturer OEM and/or the PSAP with the CLI upon determination and/or confirmation.

13. A computer program comprising instructions which, when the program is executed by a computer, cause the computer to carry out the steps of the method of claim 1.

## Patentansprüche

1. Verfahren zur zuverlässigen Durchführung von eCalls, wobei das Verfahren die folgenden Schritte umfasst:
• Bereitstellen eines CLI-Analysemoduls (325) für eCalls (310);
• Empfangen eines eCalls (310) durch das CLI-Analysemodul (325), wobei der eCall (310) einen ersten Teil (311) mit Sprach- oder Medienverbindung und einen zweiten Teil (312) mit zusätzlichen Daten aufweist, die einem Benutzerendgerät, UE, zugeordnet sind, wobei die zusätzlichen Daten eine eindeutige Kennung aufweisen, die mit einer Anruferidentifikation, CLI, verknüpft ist;
• Analysieren der Zusatzdaten durch das CLI-Analysemodul (325), wobei das CLI-Analysemodul (325) die Informationen aus den Zusatzdaten verwendet, um die CLI zu ermitteln, die CLI zu bestätigen und/oder die dem eCall (310) zugewiesene CLI mittels einer Datenbankabfrage in Bezug auf die Zusatzdaten als falsch festzustellen;
• Weiterleiten des eCalls an den Originalgerätehersteller, OEM, und/oder die PSAP zusammen mit der CLI nach deren Ermittlung und/oder Bestätigung.

2. Verfahren nach einem der vorstehenden Ansprüche, wobei das CLI-Analysemodul (325) einem OEM, einer PSAP, einem Netzbetreiber oder einer anderen vertrauenswürdigen Stelle zugeordnet ist.

3. Verfahren nach einem der vorstehenden Ansprüche, wobei eine Datenbank (330) für die Datenbankabfrage beim OEM und/oder in einem zentralen Register bereitgestellt wird.

4. Verfahren nach Anspruch 3, wobei das CLI-Analysemodul (325) verschlüsselt mit der Datenbank (330) kommuniziert.

5. Verfahren nach einem der vorstehenden Ansprüche, wobei die Zusatzdaten eine IMEI, eine VIN, eine IMSI, eine MSISDN und/oder GNSS-Daten umfassen.

6. Verfahren nach einem der vorstehenden Ansprüche, wobei die Zusatzdaten mindestens einen MSD-Datensatz umfassen.

7. Verfahren nach einem der vorstehenden Ansprüche, wobei die Zusatzdaten zumindest teilweise dynamisch vom UE (305a, 305b) generiert werden.

8. Verfahren nach einem der vorstehenden Ansprüche, wobei im Falle der Ermittlung oder Bestätigung der CLI eine Validierung der CLI durchgeführt wird.

9. Verfahren nach Anspruch 8, wobei die Validierung der CLI dadurch durchgeführt wird, dass die Zusatzdaten und/oder die CLI einem Heimnetzbetreiber zur Verfügung gestellt werden und der Heimnetzbetreiber die CLI anhand bestehender HLR- und/oder HSS-Einträge überprüft.

10. Verfahren nach einem der Ansprüche 8 oder 9, wobei die Validierung eine neue verschlüsselte Übertragung des eCalls, insbesondere der Zusatzdaten, vom UE anfordert.

11. Verfahren nach einem der vorstehenden Ansprüche, wobei der eCall abgelehnt wird, wenn die CLI als falsch ermittelt wird.

12. Ein Analysemodul für eCalls, insbesondere ein CLI-Analysemodul, wobei das Analysemodul umfasst:
• Mittel zum Empfangen eines eCalls, wobei der eCall einen ersten Teil mit einem Sprach- oder Medienanruf und einen zweiten Teil mit Zusatzdaten aufweist, die einem Benutzerendgerät, UE, zugeordnet sind, wobei die Zusatzdaten eine eindeutige Kennung aufweisen, die mit einer Anruferidentifikation, CLI, verknüpft ist;
• Mittel zum Analysieren der zusätzlichen Daten, wobei das CLI-Analysemodul die Informationen aus den zusätzlichen Daten verwendet, um die dem eCall zugewiesene CLI mittels einer Datenbankabfrage in Bezug auf die zusätzlichen Daten zu ermitteln, zu bestätigen und/oder als falsch festzustellen;
• Mittel zum Weiterleiten des eCalls an den Originalgerätehersteller, OEM, und/oder die PSAP mit der CLI nach der Ermittlung und/oder Bestätigung.

13. Ein Computerprogramm, das Anweisungen umfasst, die, wenn das Programm von einem Computer ausgeführt wird, den Computer veranlassen, die Schritte des Verfahrens nach Anspruch 1 auszuführen.

## Revendications

1. Procédé pour réaliser de façon fiable des appels d'urgence, eCalls, le procédé comprenant les étapes suivantes :
• la fourniture d'un module d'analyse de CLI (325) pour des eCalls (310) ;
• l'obtention d'un eCall (310) par le module d'analyse de CLI (325), le eCall (310) ayant une première partie (311) avec une connexion vocale ou multimédia et une seconde partie (312) avec des données supplémentaires associées à un équipement utilisateur, User Equipment UE,
dans lequel les données supplémentaires ont un identifiant unique qui est lié à une identification de ligne appelante, Calling Line Identification CLI ;
• l'analyse des données supplémentaires par le module d'analyse de CLI (325), le module d'analyse de CLI (325) utilisant les informations provenant des données supplémentaires pour déterminer la CLI, confirmer la CLI, et/ou établir que la CLI attribuée au eCall (310) est incorrecte, au moyen d'une interrogation de base de données en ce qui concerne les données supplémentaires ;
• le réacheminement du eCall jusqu'au fabricant d'équipement d'origine, Original Equipment Manufacturer OEM, et/ou au PSAP avec la CLI, à la suite de la détermination et/ou de la confirmation.

2. Procédé selon de quelconques des revendications précédentes, dans lequel le module d'analyse de CLI (325) est associé à un OEM, à un PSAP, à un opérateur de réseau, ou à une autre entité de confiance.

3. Procédé selon de quelconques des revendications précédentes, dans lequel une base de données (330) est fournie pour l'interrogation de base de données au niveau de l'OEM et/ou dans un registre central.

4. Procédé de la revendication 3, dans lequel le module d'analyse de CLI (325) communique avec la base de données (330) d'une manière chiffrée.

5. Procédé selon de quelconques des revendications précédentes, dans lequel les données supplémentaires comprennent un IMEI, un VIN, un IMSI, un MSISDN, et/ou des données GNSS.

6. Procédé selon l'une quelconque des revendications précédentes, dans lequel les données supplémentaires comprennent au moins un ensemble de données de MSD.

7. Procédé selon l'une quelconque des revendications précédentes, dans lequel les données supplémentaires sont générées au moins partiellement dynamiquement par l'UE (305a, 305b).

8. Procédé selon l'une quelconque des revendications précédentes, dans lequel, dans le cas de la détermination ou de la confirmation de la CLI, une validation de la CLI est réalisée.

9. Procédé de la revendication 8, dans lequel la validation de la CLI est réalisée en mettant les données supplémentaires et/ou la CLI à la disponibilité d'un opérateur de réseau domestique, et l'opérateur de réseau domestique vérifie la CLI avec des entrées HLR et/ou HSS existantes.

10. Procédé selon l'une quelconque des revendications précédentes 8 ou 9, dans lequel la validation demande une nouvelle transmission chiffrée du eCall, en particulier des données supplémentaires, auprès de l'UE.

11. Procédé selon de quelconques des revendications précédentes, dans lequel le eCall est rejeté s'il est déterminé que la CLI est incorrecte.

12. Module d'analyse pour des appels d'urgence, eCalls, en particulier module d'analyse de CLI, dans lequel le module d'analyse comprend :
• des moyens pour recevoir un eCall, le eCall ayant une première partie avec un appel vocal ou multimédia et une seconde partie avec des données supplémentaires associées à l'équipement utilisateur, User Equipment UE,
dans lequel les données supplémentaires ont un identifiant unique qui est lié à une identification de ligne appelante, Calling Line Identification CLI ;
• des moyens pour analyser les données supplémentaires, dans lequel le module d'analyse de CLI utilise les informations provenant des données supplémentaires pour déterminer, confirmer, et/ou établir que la CLI attribuée au eCall est incorrecte, au moyen d'une interrogation de base de données en ce qui concerne les données supplémentaires ;
• des moyens pour réacheminer le eCall jusqu'au fabricant d'équipement d'origine, Original Equipment Manufacturer OEM, et/ou au PSAP avec la CLI, à la suite de la détermination et/ou de la confirmation.

13. Programme d'ordinateur, comprenant des instructions qui, lorsque le programme est exécuté par un ordinateur, amènent l'ordinateur à effectuer les étapes du procédé de la revendication 1.
